# EUROPÄISCHE PATENTSCHRIFT

(11) **EP 2 649 287 B1**
(45) Veröffentlichungstag und Bekanntmachung des Hinweises auf die Patenterteilung: **14.10.2020**
(21) Anmeldenummer: 11794123.7
(22) Anmeldetag: 07.12.2011
(51) Int. Cl.: F02D 41/24, B60K 6/48, B60W 10/06, B60W 20/20, F02D 41/14, F02D 41/12, B60W 50/00, B60W 10/08, B60W 20/50, B60W 30/20

(54) **VERFAHREN ZUM BETREIBEN EINER BRENNKRAFTMASCHINE MIT UNTERSTÜTZUNG DURCH EINE ELEKTRISCHE MASCHINE UND BRENNKRAFTMASCHINE**
METHOD FOR OPERATING AN INTERNAL COMBUSTION ENGINE WITH ASSISTANCE FROM AN ELECTRIC MACHINE, AND INTERNAL COMBUSTION ENGINE
PROCÉDÉ POUR FAIRE FONCTIONNER UN MOTEUR À COMBUSTION INTERNE ASSISTÉ PAR UN MOTEUR ÉLECTRIQUE, ET MOTEUR À COMBUSTION INTERNE

(30) Priorität: 10.12.2010 DE 102010062809; 17.12.2010 DE 102010063377
(43) Veröffentlichungstag der Anmeldung: 16.10.2013
(73) Patentinhaber: Vitesco Technologies GmbH, 30165 Hannover (DE)
(72) Erfinder: JEHLE, Martin, 93138 Lappersdorf (DE); WEISS, Frank, 93080 Pentling/Grasslfing (DE); LANG, Holger, 93059 Regensburg (DE); GUILLEN CASTILLO, Fernando, 93049 Regensburg (DE)
(74) Vertreter: Waldmann, Georg Alexander
(86) Internationale Anmeldenummer: PCT/EP2011/071993
(87) Internationale Veröffentlichungsnummer: WO 2012/076561

(56) Entgegenhaltungen:
- WO-A2-2009/019584
- DE-A1-102006 013 295
- DE-A1-102008 047 476
- DE-B3-102006 027 405
- US-A1- 2011 224 888

## Beschreibung

Die vorliegende Erfindung betrifft ein Verfahren zum Betreiben einer mit mindestens einem Injektor versehenen Brennkraftmaschine mit Unterstützung durch eine elektrische Maschine, bei dem Testeinspritzungen durchgeführt werden, um die zur Steuerung der Einspritzvorgänge verwendeten Injektorparameter während des Betriebes der Brennkraftmaschine anzupassen, gemäß den Merkmalen des Oberbegriffs von Patentanspruch 1. Des Weiteren ist die Erfindung auf eine Brennkraftmaschine mit mindestens einem Injektor, einer Steuereinheit und einer die Brennkraftmaschine unterstützenden elektrischen Maschine gerichtet, gemäß dem Oberbegriff des Anspruchs 14. Speziell betrifft die Erfindung Dieselmotoren oder magerlaufende Benzinmotoren.

Die Injektoren von Brennkraftmaschinen besitzen Toleranzen, die zu unerwarteten Ungenauigkeiten in Bezug auf die eingespritzte Kraftstoffmenge führen können und somit eine Verschlechterung der Qualität der Emissionen der Brennkraftmaschine bewirken können. Dies kann durch eine Anpassung der Injektorcharakteristik während der Betriebsdauer der Brennkraftmaschine verhindert werden. Es ist bekannt, dass die Eigenschaften von Injektoren bei Benzin- und Dieselmotoren während der Betriebsdauer der Motoren angepasst werden, um Produktionstoleranzen und während des Betriebes auftretende Veränderungen zu kompensieren. Die angepassten Injektoreigenschaften werden dann für die weitere Steuerung der Injektoren verwendet, so dass exakte Kraftstoffmengen eingespritzt werden können.

So können durch eine exakte Anpassung der gesamten Injektorcharakteristik sogar Injektoren mit einer hohen Toleranzdrift über ihre Lebensdauer dazu verwendet werden, sogar strengeren zukünftigen Emissionsanforderungen gerecht zu werden.

Um eine derartige Anpassung der Injektoreigenschaften durchzuführen, hat man während Kraftstoffabsperrphasen Testeinspritzungen durchgeführt, bei denen periodische Einspritzimpulse für einen der Injektoren durchgeführt wurden, um eine geringe Menge an Kraftstoff einzuspritzen, beispielsweise beim Erreichen jedes zweiten oberen Totpunktes des entsprechenden Zylinders(betriebsinterner Stand der Technik). Während dieser Testeinspritzungen wurde das Drehzahlverhalten der Brennkraftmaschine mit Hilfe des Kurbelwellenpositionssensors beobachtet. Aus dem Drehzahlverhalten wurde das erzeugte Motordrehmoment geschätzt und die entsprechende einzuspritzende Kraftstoffmenge berechnet. Durch wiederholtes Durchführen dieses Prozesses für jeden Zylinder konnten die Injektorparameter für jeden Zylinder während des Betriebes der Brennkraftmaschine angepasst werden.

Bei diesem Anpassungsverfahren können jedoch Drehzahlschwingungen der Brennkraftmaschine auftreten, die sich störend auswirken. Das Verfahren ist daher nur begrenzt anwendbar, insbesondere nur in Verbindung mit geringen Kraftstoffmengen und nur in Verbindung mit bestimmten Antriebssituationen. Ferner ist für die Schätzung des erzeugten Drehmomentes aus der ermittelten Drehzahl ein beträchtlicher Kalibrierungsaufwand erforderlich.

Ein Verfahren mit den Merkmalen des Oberbegriffes von Patentanspruch 1 ist aus der WO 2009/019584 A2 sowie aus der DE 103 05 523 A1 bekannt. Bei diesen Verfahren wird die elektrische Maschine so angesteuert, dass sie Drehmomentimpulse erzeugt, die die durch die Kraftstoffeinspritzung erzeugten Drehmomentschwankungen kompensieren.

Aus der EP 0 899 151 A2 ist es weiterhin bekannt, durch Anfettung die Funktionsfähigkeit einer NOx-Adsorptionsvorrichtung wieder herzustellen und die dadurch entstehenden Drehmomentimpulse mit Hilfe der regenerativen Bremskraft eines Elektromotors zu kompensieren.

Aus der DE 10 2006 013 295 A1 ist es bekannt, Drehmomentänderungen eines Verbrennungsmotors infolge des Umschaltens zwischen den Betriebsarten durch einen Elektromotor zu kompensieren.

In der DE 197 51 100 A1 ist beschrieben, dass Drehmomentschwankungen eines Verbrennungsmotors auf der Grundlage eines von einer Drehmoment/Motorstrom-Kennlinienentscheidungsvorrichtung bestimmten Wertes durch Änderung des Stromes eines Elektromotors unterdrückt werden.

Mit den bekannten Anpassungsverfahren ist es jedoch nur möglich, die Injektorcharakteristik bei sehr geringen Einspritzmengen anzupassen.

Der vorliegenden Erfindung liegt die Aufgabe zugrunde, ein Verfahren der eingangs beschriebenen Art zu schaffen, mit dem sich besonders gute Laufeigenschaften der Brennkraftmaschine erzielen lassen und das eine Anpassung der Injektorcharakteristik auf besonders genaue Weise ermöglicht.

Diese Aufgabe wird erfindungsgemäß bei einem Verfahren der angegebenen Art durch die kennzeichnenden Merkmale von Patentanspruch 1 gelöst.

Die durch die vorgenommenen Testeinspritzungen verursachten Drehmomentschwingungen werden ausgeschaltet bzw. kompensiert, indem Drehmomentimpulse von einer mit der Brennkraftmaschine gekoppelten elektrischen Maschine erzeugt werden, die den durch die Testeinspritzungen erzeugten Drehmomentimpulsen entgegenwirken und diese somit neutralisieren. Bei einer derartigen elektrischen Maschine kann es sich beispielsweise um einen parallel zur Brennkraftmaschine angeordneten Elektromotor in einem Hybridfahrzeug handeln, aber beispielsweise auch bei einer konventionellen Brennkraftmaschine um eine herkömmliche Lichtmaschine oder einen Starter-Generator. Diese elektrischen Maschinen können daher eine Abtriebswelle der Brennkraftmaschine zusätzlich mit Drehmoment beaufschlagen oder von einer solchen Abtriebswelle Drehmoment abgreifen. Der entsprechende Abgriff bzw. die entsprechende Beaufschlagung mit Drehmoment von der bzw. durch die elektrische Maschine wird hierbei als "von der elektrischen Maschine erzeugtes Drehmoment" bezeichnet, das so gesteuert wird, dass von der elektrischen Maschine auf synchronisierte Weise zu den durch die Testeinspritzungen erzeugten positiven Drehmomentimpulsen negative Drehmomentimpulse generiert werden, die die gewünschte Kompensation bewirken.

Es wird somit ein durch eine elektrische Maschine unterstütztes Anpassungsverfahren für die Charakteristik eines Injektors vorgesehen.

Die Amplitude und/oder Dauer der von der elektrischen Maschine erzeugten und angepassten Drehmomentimpulse können dann insbesondere als Maß für die durch die Testeinspritzungen erzeugten Drehmomentimpulse verwendet und zur Berechnung der einzuspritzenden Kraftstoffmenge und/oder zur Anpassung der Injektionsparameter eingesetzt werden. Hierdurch kann die einzuspritzende Kraftstoffmenge präzise und einfach ermittelt werden, oder es kann eine einfache und präzise Anpassung der Injektorparameter durchgeführt werden.

Die durch die Testeinspritzungen erzeugten Drehmomentimpulse können als von der Motorsteuerung vorgegebener Wert der Steuerung der elektrischen Maschine zugeführt werden. Die durch die Testeinspritzungen erzeugten Drehmomentimpulse können jedoch auch erst ermittelt und der Motorsteuerung zugeführt werden und dann der Steuerung der elektrischen Maschine zugeführt werden. Die elektrische Maschine kann beispielsweise eigene Steuereinrichtungen aufweisen, die dann in Abhängigkeit von den zugeführten Werten, die den Drehmomentimpulsen der Testeinspritzungen entsprechen, die von der elektrischen Maschine erzeugten Drehmomentimpulse (Amplitude und/oder Impulsdauer) entsprechend steuern.

Vorzugsweise können die Amplitude und/oder Dauer der von der elektrischen Maschine erzeugten Drehmomentimpulse über die Zeit angepasst werden.

Ferner kann auch die Form der von der elektrischen Maschine erzeugten Drehmomentimpulse über die Zeit angepasst werden.

Das erfindungsgemäße Verfahren kann während Kraftstoffabsperrphasen durchgeführt werden. Es hat jedoch auch den Vorteil, dass es während normaler Zündphasen der Brennkraftmaschine durchgeführt werden kann, da die Testeinspritzungen mit größeren Kraftstoffmengen durchgeführt werden können, weil erfindungsgemäß hierdurch verursachte Drehzahlschwingungen vermieden werden. Die Anpassung der Injektorparameter kann daher während normaler Zündphasen der Brennkraftmaschine durchgeführt werden, indem die eingespritzte Kraftstoffmenge eines Zylinders erhöht und das zusätzliche Drehmoment mit einem negativen Drehmomentimpuls von der elektrischen Maschine kompensiert wird.

Bei noch einer anderen Variante des erfindungsgemäßen Verfahrens werden die durch die Testeinspritzungen und die von der elektrischen Maschine erzeugten Drehmomentimpulse allmählich erhöht.

Erfindungsgemäß wird somit die Drehmomenterzeugung einer elektrischen Maschine einschließlich einer gesteuerten bzw. geregelten Lichtmaschine dazu benutzt, den durch die Durchführung der Testeinspritzungen erzielten negativen Effekt von Drehzahlschwingungen bzw. Drehzahlschwankungen zu kompensieren und dabei diese Drehmomenterzeugung der elektrischen Maschine insbesondere für die Ermittlung der einzuspritzenden Kraftstoffmenge zu benutzen. Insgesamt lässt sich somit mit dem erfindungsgemäßen Verfahren eine verbesserte Laufruhe der Brennkraftmaschine erreichen, da Schwingungen bzw. Schwankungen der Brennkraftmaschinendrehzahl unterdrückt werden. Die Anpassung der entsprechenden Injektorparameter kann über Testeinspritzungen mit größeren Kraftstoffmengen durchgeführt werden, ohne dass hierdurch die Laufeigenschaften der Brennkraftmaschine negativ beeinflusst werden. Die Anpassung dieser Parameter kann insbesondere auch während normaler Zündphasen der Brennkraftmaschine erfolgen. Das mit den Testeinspritzungen erzeugte Drehmoment kann einfach ermittelt bzw. geschätzt werden, da hierzu das Drehzahlverhalten der Brennkraftmaschine nicht mehr benötigt wird. Insgesamt lässt sich eine besonders genaue Anpassung der Injektorparameter erreichen.

Die elektrische Maschine wird vorzugsweise zur Kompensation der durch die Testeinspritzungen erzeugten Drehmomentimpulse eine definierte Zeit vor dem Kompensationszeitpunkt angesteuert, um Verzögerungen bei der Umsetzung zu verhindern. Auf diese Weise werden Kommunikationsverzögerungen zwischen der Steuereinheit (ECU) der Brennkraftmaschine und den entsprechenden Steuereinrichtungen der elektrischen Maschine vermieden. Insbesondere kann der Drehmomentsollwert der elektrischen Maschine eine gewisse Zeit vor der durch die Testeinspritzungen erfolgten Drehmomenterzeugung erhöht werden.

Auch kann das zeitliche Verhalten der Drehmomentimpulse geregelt werden, beispielsweise durch Verschiebung, um eine optimierte Synchronisation zu erzielen.

Die vorliegende Erfindung betrifft ferner eine Brennkraftmaschine mit mindestens einem Injektor, einer Steuereinheit und einer elektrischen Maschine oder einer die Brennkraftmaschine unterstützenden elektrischen Maschine. Die Brennkraftmaschine ist erfindungsgemäß dadurch gekennzeichnet, dass sie die kennzeichnenden Merkmale von Patentanspruch 14 aufweist.

In einer besonderen Ausgestaltung der Erfindung weist das Verfahren zum Betreiben einer mit mindestens einem Injektor versehenen Brennkraftmaschine mit Unterstützung durch eine elektrische Maschine, die folgenden Schritte auf:
- Berechnen einer Solldrehzahl der Brennkraftmaschine für den momentanen Betriebszustand;
- Erzeugen eines Testimpulses am Injektor;
- Schätzen des durch diesen Testimpuls erzeugten Drehmomentimpulses;
- Messen der Abweichung zwischen der berechneten Solldrehzahl und der IST-Drehzahl der Brennkraftmaschine durch die elektrische Maschine;
- Erzeugen eines Drehmomentimpulses durch die elektrische Maschine zur Kompensation der gemessenen Abweichung;
- Vergleichen der durch die elektrische Maschine erzeugten Drehmomentimpulsinformation mit der geschätzten Drehmomentimpulsinformation und Ermitteln der Differenz; und
- Anpassen der Injektorcharakteristik unter Verwendung der ermittelten Differenz.

Bei der vorgenannten besonderen Ausgestaltung des erfindungsgemäßen Verfahren wird ein Testimpuls am Injektor erzeugt. Dieser Testimpuls führt zu einer Abweichung der Drehzahl der Brennkraftmaschine gegenüber der berechneten Solldrehzahl. Da die elektrische Maschine in der Lage ist, diese Abweichung zwischen der IST-Drehzahl und Solldrehzahl zu messen und insbesondere sehr rasch auf diese Abweichung reagieren kann, da beispielsweise pro Umdrehung 40 Messungen durchgeführt werden, kann die elektrische Maschine als Reaktion auf diese Abweichung einen Drehmomentimpuls erzeugen, der zu einer Kompensation dieser durch den Testimpuls des Injektors verursachten Abweichung der Drehzahl der Brennkraftmaschine führt. Der exakte Wert dieses Drehmomentimpulses kann von der elektrischen Maschine mit einer sehr guten Genauigkeit (Toleranz weit unter 1 %) berechnet werden. Auf diese Weise erfolgt somit eine Kompensation der Drehzahlabweichung.

Ferner wird bei der vorgenannten besonderen Ausgestaltung des erfindungsgemäßen Verfahrens der von der elektrischen Maschine zu Kompensationszwecken erzeugte Drehmomentimpuls mit einem Schätzwert des durch den Testimpuls erzeugten Drehmomentimpulses, der von der Steuereinheit der Brennkraftmaschine ermittelt wird, verglichen, und es wird die Differenz zwischen den beiden Werten ermittelt. Diese Differenz zwischen den beiden Werten entspricht exakt der Ungenauigkeit der Injektorcharakteristik. Unter Verwendung der ermittelten Differenz erfolgt dann eine entsprechende Anpassung der Injektorcharakteristik.

Erfindungsgemäß wird somit bei der vorgenannten besonderen Ausgestaltung des erfindungsgemäßen Verfahrens die elektrische Maschine im Modus einer geschlossenen Regelschleife eingesetzt. Die Steuereinheit der Brennkraftmaschine berechnet eine Solldrehzahl der Brennkraftmaschine für den momentanen Betriebszustand, wobei diese Solldrehzahl von der Brennkraftmaschine, aber auch parallel dazu von der elektrischen Maschine, angefordert wird.

Bei der vorgenannten besonderen Ausgestaltung des erfindungsgemäßen Verfahrens erfolgt somit in der vorstehend beschriebenen Weise eine Anpassung der Injektorcharakteristik und damit eine Anpassung der eingespritzten Kraftstoffmenge. Wenn die Brennkraftmaschine mehrere Injektoren besitzt, wird das erfindungsgemäße Verfahren vorzugsweise für sämtliche Injektoren über den gesamten Einspritzbereich durchgeführt. Hierdurch können die Toleranzen der Injektoren auf die Messtoleranzen reduziert werden.

Der Vorteil der vorgenannten besonderen Ausgestaltung des erfindungsgemäßen Verfahrens besteht darin, dass die komplette Charakteristik sämtlicher Injektoren auf sehr robuste Weise mit guter Genauigkeit angepasst werden kann. Drehzahlschwingungen der Brennkraftmaschine werden auf effiziente Weise von der elektrischen Maschine kompensiert.

In Weiterbildung der vorgenannten besonderen Ausgestaltung des erfindungsgemäßen Verfahrens wird der von der elektrischen Maschine erzeugte Drehmomentimpuls zur Kompensation von Drehmomentabweichungen der Brennkraftmaschine verwendet. Auf diese Weise wird eine Drehmomentanpassung der Brennkraftmaschine durchgeführt. Wenn das Drehmomentmodell der Brennkraftmaschine exakt ist, verhält sich die elektrische Maschine passiv. Bei Ungenauigkeiten des Drehmomentmodells der Brennkraftmaschine liefert die elektrische Maschine einen entsprechenden Drehmomentimpuls, um die Differenz zu kompensieren. Die entsprechende Information über das erforderliche zusätzliche Drehmoment kann dazu eingesetzt werden, um das Drehmomentmodell der Brennkraftmaschine anzupassen. Vorzugsweise wird das erfindungsgemäße Verfahren gemäß Patentanspruch 1, insbesondere die Anpassung der Einspritzmenge des Injektors, nach Beendigung der Anpassung des Drehmomentmodells durchgeführt.

Ferner bezieht sich die vorliegende Erfindung auf eine Brennkraftmaschine mit mindestens einem Injektor, einer Steuereinheit und einer die Brennkraftmaschine unterstützenden elektrischen Maschine. Die Brennkraftmaschine ist erfindungsgemäß dadurch gekennzeichnet, dass die Steuereinheit und die elektrische Maschine zur Durchführung der vorstehend beschriebenen Verfahrensschritte der vorgenannten besonderen Ausgestaltung des erfindungsgemäßen Verfahrens ausgebildet sind.

Die Erfindung wird nachfolgend anhand eines Ausführungsbeispiels in Verbindung mit der Zeichnung im Einzelnen erläutert. Es zeigen:
- Figur 1: eine schematische Darstellung einer Brennkraftmaschine, die eine elektrische Maschine aufweist; und
- Figur 2: ein Ablaufdiagramm zur Durchführung einer Ausführungsform des erfindungsgemäßen Verfahrens.
- Figur 3: ein Ablaufdiagramm der Verfahrensschritte eines besonderen Ausführungsbeispieles des erfindungsgemäßen Verfahrens.

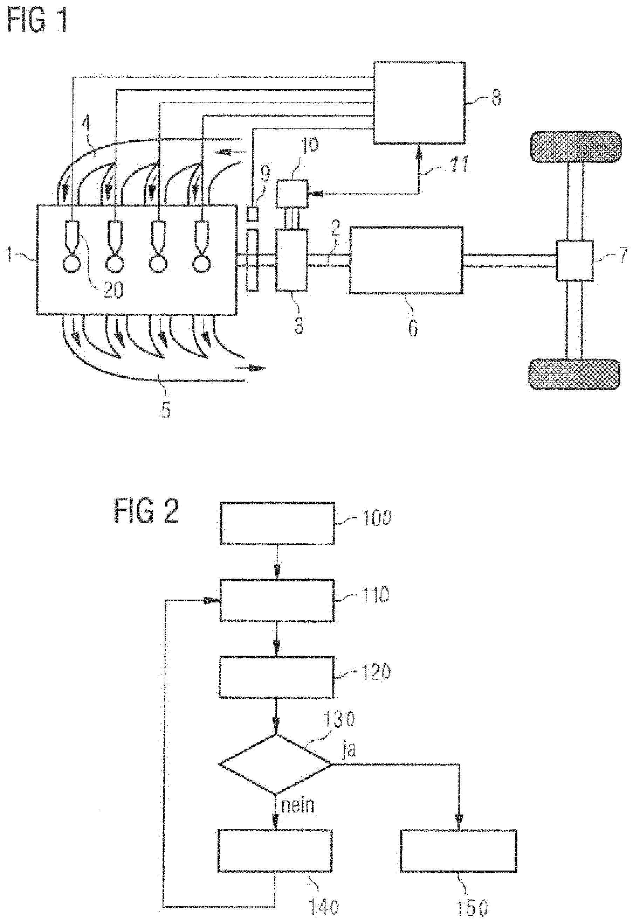

Figur 1 zeigt eine schematische Teildarstellung eines mit einer Brennkraftmaschine 1 versehenen Fahrzeuges. Die Brennkraftmaschine besitzt einen Luftansaugtrakt 4 sowie einen Abgastrakt 5. Sie ist mit einem Einspritzsystem versehen, von dem vier Injektoren 20 schematisch dargestellt sind.

Das von der Brennkraftmaschine 1 erzeugte Drehmoment wird über eine Abtriebswelle 2 und ein Getriebe 6 auf einen Antriebszug 7 abgegeben, mit dem die Hinterräder des Fahrzeuges angetrieben werden. Mit der Abtriebswelle 2 ist eine elektrische Maschine 3, beispielsweise ein Starter-Generator, gekoppelt, die mit einem Inverter 10 in Verbindung steht.

Die Brennkraftmaschine 1 weist ferner eine Steuereinheit 8 (ECU) auf, mit der die Injektoren 20 zur Abgabe einer gewünschten Kraftstoffmenge angesteuert werden. Des Weiteren steht die Steuereinheit 8 mit der elektrischen Maschine 3 über einen zum Inverter 10 führenden Bus 11 in Verbindung. Über einen Drehzahlsensor 9 wird die Drehzahl der Abtriebswelle 2 der Brennkraftmaschine 1 gemessen und als Signal der Steuereinheit 8 zugeführt.

Wie vorstehend erwähnt, werden entsprechende Testeinspritzungen durchgeführt, um die Injektor-Charakteristik anzupassen. Die hieraus resultierenden Drehmomentschwingungen werden über den Drehzahlsensor 9 erfasst und als Information der Steuereinheit 8 zugeführt. Diese berechnet bzw. schätzt aus dem Drehzahlverhalten das erzeugte Motordrehmoment und führt diesen Wert der Steuerung der elektrischen Maschine 3 zu, damit diese einen entsprechenden Drehmomentimpuls erzeugt, der dem durch die Testeinspritzungen erzeugten Drehmomentimpuls entgegenwirkt und diesen kompensiert. Ferner wird der von der elektrischen Maschine erzeugte Drehmomentimpuls zur Anpassung der Injektor-Charakteristik verwendet.

Figur 2 zeigt ein Ablaufdiagramm eines Ausführungsbeispiels des erfindungsgemäßen Verfahrens. In Schritt 100 werden die Initialwerte für die Testimpulse ermittelt. Gemäß Schritt 110 werden die Testimpulse ausgeführt. Es folgt dann in Schritt 120 eine Auswertung des Drehzahlsignals. In Schritt 130 wird geprüft, ob die Anpassung der Injektor-Charakteristik zu beenden ist. Wenn dies der Fall ist, werden die entsprechenden Adaptionswerte verwendet (gemäß Schritt 150). Ist dies nicht der Fall, rückt das Verfahren zu Schritt 140 vor, in dem eine Anpassung der Momentankompensation folgt. Das Verfahren kehrt dann wieder zu Schritt 110 zurück.

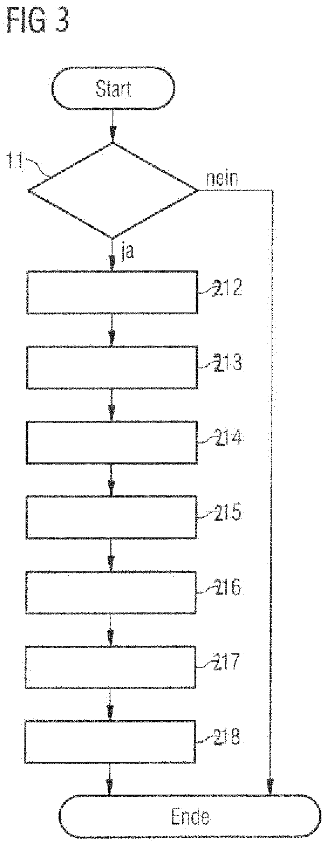

In Figur 3 ist der Ablauf einer besonderen Ausgestaltung des erfindungsgemäßen Verfahrens in einzelnen Schritten dargestellt. Die einzelnen Schritte dieses Verfahren sind in einem Ablaufdiagramm dargestellt. Nach dem Start wird bei 211 festgestellt, ob ein Bedarf zur Anpassung des momentanen Lastpunktes besteht. Ist dies nicht der Fall, rückt das Verfahren zum Ende vor. Wenn ein Anpassungsbedarf besteht, erfolgt in Schritt 212 eine Drehmomentanpassung der Brennkraftmaschine in der vorstehend beschriebenen Weise. Danach wird in Schritt 213 die Solldrehzahl der Brennkraftmaschine berechnet. In Schritt 214 wird die Solldrehzahl der Brennkraftmaschine von der Brennkraftmaschine und der elektrischen Maschine angefordert. In Schritt 215 erzeugt die Brennkraftmaschine einen Einspritzimpuls. In Schritt 216 kompensiert die elektrische Maschine die Drehzahlschwingung der Brennkraftmaschine, misst den erforderlichen Drehmomentwert und gibt diesen an die Steuereinheit (ECU) weiter. Die Steuereinheit (ECU) der Brennkraftmaschine vergleicht in Schritt 217 den gemessenen Drehmomentwert von der elektrischen Maschine mit dem eingegebenen Schätzwert des Testimpulsdrehmomentes und ermittelt die entsprechende Differenz. In Schritt 218 erfolgt dann die Anpassung der Injektorcharakteristik unter Verwendung der sich aus dem Vergleich von Schritt 217 ergebenden Differenz. Das vorstehend beschriebene Verfahren kann für jeden Injektor der Brennkraftmaschine einzeln wiederholt werden.

## Patentansprüche

1. Verfahren zum Betreiben einer mit mindestens einem Injektor versehenen Brennkraftmaschine mit Unterstützung durch eine elektrische Maschine, bei dem Testeinspritzungen durchgeführt werden, um die zur Steuerung der Einspritzvorgänge verwendeten Injektorparameter während des Betriebes der Brennkraftmaschine anzupassen, wobei während der Testeinspritzungen von einer mit der Brennkraftmaschine gekoppelten elektrischen Maschine auf synchronisierte Weise zu den durch die Testeinspritzungen erzeugten positiven Drehmomentimpulsen negative Drehmomentimpulse erzeugt werden, die den durch die Testeinspritzungen erzeugten Drehmomentimpulsen entgegenwirken, **dadurch gekennzeichnet, dass** die Amplitude und/oder Dauer der von der elektrischen Maschine erzeugten und angepassten Drehmomentimpulse als Maß für die durch die Testeinspritzungen erzeugten Drehmomentimpulse verwendet und zur Berechnung der einzuspritzenden Kraftstoffmenge und/oder zur Anpassung der Injektorparameter eingesetzt werden.

2. Verfahren nach Anspruch 1, **dadurch gekennzeichnet, dass** die Amplitude und/oder Dauer der von der elektrischen Maschine erzeugten Drehmomentimpulse über die Zeit angepasst werden.

3. Verfahren nach einem der vorangehenden Ansprüche , **dadurch gekennzeichnet, dass** es während Kraftstoffabsperrphasen durchgeführt wird.

4. Verfahren nach einem der Ansprüche 1 oder 2, **dadurch gekennzeichnet, dass** es während normaler Zündphasen der Brennkraftmaschine durchgeführt wird.

5. Verfahren nach einem der vorangehenden Ansprüche, **dadurch gekennzeichnet, dass** die durch die Testeinspritzungen und die von der elektrischen Maschine erzeugten Drehmomentimpulse allmählich erhöht werden.

6. Verfahren nach einem der vorangehenden Ansprüche, **dadurch gekennzeichnet, dass** die durch die Testeinspritzungen erzeugten Drehmomentimpulse als von der Motorsteuerung vorgegebener Wert der Steuerung der elektrischen Maschine zugeführt werden.

7. Verfahren nach einem der Ansprüche 1 bis 5, **dadurch gekennzeichnet, dass** die durch die Testeinspritzungen erzeugten Drehmomentimpulse ermittelt, der Motorsteuerung zugeführt und dann der Steuerung der elektrischen Maschine zugeführt werden.

8. Verfahren nach einem der vorangehenden Ansprüche, **dadurch gekennzeichnet, dass** die elektrische Maschine zur Kompensation der durch die Testeinspritzungen erzeugten Drehmomentimpulse eine definierte Zeit vor dem Kompensationszeitpunkt angesteuert wird, um Verzögerungen bei der Umsetzung zu verhindern.

9. Verfahren zum Betreiben einer Brennkraftmaschine nach Anspruch 1, mit den folgenden Schritten:
- Berechnen einer Solldrehzahl der Brennkraftmaschine für den momentanen Betriebszustand;
- Erzeugen eines Testimpulses am Injektor;
- Schätzen des durch diesen Testimpuls erzeugten Drehmomentimpulses;
- Messen der Abweichung zwischen der berechneten Solldrehzahl und der IST-Drehzahl der Brennkraftmaschine durch die elektrische Maschine;
- Erzeugen eines Drehmomentimpulses durch die elektrische Maschine zur Kompensation der gemessenen Abweichung;
- Vergleichen der durch die elektrische Maschine erzeugten Drehmomentimpulsinformation mit der geschätzten Drehmomentimpulsinformation und Ermitteln der Differenz; und
- Anpassen der Injektorcharakteristik unter Verwendung der ermittelten Differenz.

10. Verfahren nach Anspruch 9, **dadurch gekennzeichnet, dass** der von der elektrischen Maschine erzeugte Drehmomentimpuls zur Kompensation von Drehmomentabweichungen der Brennkraftmaschine verwendet wird.

11. Verfahren nach Anspruch 10, **dadurch gekennzeichnet, dass** die Information über das erforderliche zusätzliche Drehmoment von der elektrischen Maschine zur Anpassung des Drehmomentmodells der Brennkraftmaschine verwendet wird.

12. Verfahren nach Anspruch 11, **dadurch gekennzeichnet, dass** die Anpassung der Einspritzmenge des Injektors nach Beendigung der Anpassung des Drehmomentmodells durchgeführt wird.

13. Verfahren nach einem der Ansprüche 9 bis 12 zum Betreiben einer Brennkraftmaschine mit mehreren Injektoren, **dadurch gekennzeichnet, dass** es für sämtliche Injektoren über den gesamten Einspritzbereich durchgeführt wird.

14. Brennkraftmaschine mit mindestens einem Injektor, einer Steuereinheit und einer elektrischen Maschine, **dadurch gekennzeichnet, dass** die Steuereinheit (8) und die elektrische Maschine (3) zur Durchführung des Verfahrens nach einem der Ansprüche 1 bis 13 ausgebildet sind.

## Claims

1. Method for operating an internal combustion engine which is provided with at least one injector, with assistance by way of an electric machine, in the case of which method test injections are carried out, in order to adapt the injector parameters which are used to control the injection operations during the operation of the internal combustion engine, negative torque impulses being produced during the test injections by an electric machine which is coupled to the internal combustion engine in a synchronized way with respect to the positive torque impulses which are produced by way of the test injections, which negative torque impulses counteract the torque impulses which are produced by way of the test injections, **characterized in that** the amplitude and/or duration of the torque impulses which are produced and adapted by the electric machine are used as a measure of the torque impulses which are produced by way of the test injections, and are used for the calculation of the fuel quantity to be injected and/or for the adaptation of the injector parameters.

2. Method according to Claim 1, **characterized in that** the amplitude and/or duration of the torque impulses which are produced by the electric machine are adapted over time.

3. Method according to either of the preceding claims, **characterized in that** it is carried out during fuel shut-off phases.

4. Method according to either of Claims 1 and 2, **characterized in that** it is carried out during normal ignition phases of the internal combustion engine.

5. Method according to one of the preceding claims, **characterized in that** the torque impulses which are produced by way of the test injections and the torque impulses which are produced by the electric machine are increased gradually.

6. Method according to one of the preceding claims, **characterized in that** the torque impulses which are produced by way of the test injections are fed to the controller of the electric machine as a value which is predefined by the engine controller.

7. Method according to one of Claims 1 to 5, **characterized in that** the torque impulses which are produced by way of the test injections are determined, are fed to the engine controller, and are then fed to the controller of the electric machine.

8. Method according to one of the preceding claims, **characterized in that**, for the compensation of the torque impulses which are produced by way of the test injections, the electric machine is actuated at a defined time before the compensation time, in order to prevent delays in the implementation.

9. Method for operating an internal combustion engine according to Claim 1, with the following steps:
- calculating of a setpoint rotational speed of the internal combustion engine for the instantaneous operating state;
- producing of a test impulse at the injector;
- estimating of the torque impulse which is produced by way of the said test impulse;
- measuring of the deviation between the calculated setpoint rotational speed and the actual rotational speed of the internal combustion engine by way of the electric machine;
- producing of a torque impulse by way of the electric machine for the compensation of the measured deviation;
- comparing of the torque impulse information which is produced by way of the electric machine with the estimated torque impulse information, and determining of the difference; and
- adapting of the injector characteristic with the use of the determined difference.

10. Method according to Claim 9, **characterized in that** the torque impulse which is produced by the electric machine is used for the compensation of torque deviations of the internal combustion engine.

11. Method according to Claim 10, **characterized in that** the information about the required additional torque from the electric machine is used for the adaptation of the torque model of the internal combustion engine.

12. Method according to Claim 11, **characterized in that** the adaptation of the injection quantity of the injector is carried out after ending of the adaptation of the torque model.

13. Method according to one of Claims 9 to 12 for operating an internal combustion engine with a plurality of injectors, **characterized in that** it is carried out for all the injectors over the entire injection range.

14. Internal combustion engine with at least one injector, a control unit and an electric machine, **characterized in that** the control unit (8) and the electric machine (3) are configured to carry out the method according to one of Claims 1 to 13.

## Revendications

1. Procédé pour faire fonctionner un moteur à combustion interne pourvu d'au moins un injecteur avec assistance par une machine électrique, lors duquel des injections de test sont effectuées afin d'adapter les paramètres d'injecteur utilisés pour la commande des opérations d'injection pendant le fonctionnement du moteur à combustion interne, des impulsions de couple négatives, qui agissent en opposition aux impulsions de couple positives générées par les injections de test, étant générées pendant les injections de test par une machine électrique couplée au moteur à combustion interne d'une manière synchronisée avec les impulsions de couple positives générées par les injections de test, **caractérisé en ce que** l'amplitude et/ou la durée des impulsions de couple générées par la machine électrique et adaptées sont utilisées comme une mesure pour les impulsions de couple générées par les injections de test et appliquées pour le calcul du volume de carburant à injecter et/ou pour l'adaptation des paramètres d'injecteur.

2. Procédé selon la revendication 1, **caractérisé en ce que** l'amplitude et/ou la durée des impulsions de couple générées par la machine électrique sont adaptées en fonction du temps.

3. Procédé selon l'une des revendications précédentes, **caractérisé en ce qu'**il est mis en œuvre pendant les phases de blocage du carburant.

4. Procédé selon l'une des revendications 1 et 2, **caractérisé en ce qu'**il est mis en œuvre pendant les phases d'allumage normales du moteur à combustion interne.

5. Procédé selon l'une des revendications précédentes, **caractérisé en ce que** les impulsions de couple générées par les injections de test et celles générées par la machine électrique sont augmentées graduellement.

6. Procédé selon l'une des revendications précédentes, **caractérisé en ce que** les impulsions de couple générées par les injections de test sont acheminées à la commande de la machine électrique sous la forme d'une valeur prédéfinie par la commande de moteur.

7. Procédé selon l'une des revendications 1 à 5, **caractérisé en ce que** les impulsions de couple générées par les injections de test sont déterminées, acheminées à la commande de moteur et ensuite acheminées à la commande de la machine électrique.

8. Procédé selon l'une des revendications précédentes, **caractérisé en ce que** la machine électrique, en vue de compenser les impulsions de couple générées par les injections de test, est excitée un temps défini avant l'instant de la compensation afin d'éviter les retards lors de la conversion.

9. Procédé pour faire fonctionner un moteur à combustion interne selon la revendication 1, comprenant les étapes suivantes :
- calcul d'une vitesse de rotation de consigne du moteur à combustion interne pour l'état opérationnel momentané ;
- génération d'une impulsion de test au niveau de l'injecteur ;
- estimation de l'impulsion de couple générée par cette impulsion de test ;
- mesure de l'écart entre la vitesse de rotation de consigne et la vitesse de rotation réelle du moteur à combustion interne par la machine électrique ;
- génération d'une impulsion de couple par la machine électrique pour compenser l'écart mesuré ;
- comparaison de l'information d'impulsion de couple générée par la machine électrique avec l'information d'impulsion de couple estimée et détermination de la différence ; et
- adaptation de la caractéristique d'injecteur en utilisant la différence déterminée.

10. Procédé selon la revendication 9, **caractérisé en ce que** l'impulsion de couple générée par la machine électrique est utilisée pour la compensation des écarts de couple du moteur à combustion interne.

11. Procédé selon la revendication 10, **caractérisé en ce que** l'information à propos du couple supplémentaire nécessaire est utilisée par la machine électrique pour l'adaptation du modèle de couple du moteur à combustion interne.

12. Procédé selon la revendication 11, **caractérisé en ce que** l'adaptation du volume d'injection de l'injecteur est réalisée après avoir terminé l'adaptation du modèle de couple.

13. Procédé selon l'une des revendications 9 à 12 pour faire fonctionner un moteur à combustion interne comprenant plusieurs injecteurs, **caractérisé en ce qu'**il est mis en œuvre pour tous les injecteurs sur la totalité de la plage d'injection.

14. Moteur à combustion interne comprenant au moins un injecteur, une unité de commande et une machine électrique, **caractérisé en ce que** l'unité de commande (8) et la machine électrique (3) sont configurées pour mettre en œuvre le procédé selon l'une des revendications 1 à 13.
